# EUROPÄISCHE PATENTSCHRIFT

(11) **EP 1 202 841 B1**
(45) Veröffentlichungstag und Bekanntmachung des Hinweises auf die Patenterteilung: **07.09.2005**
(21) Anmeldenummer: 00949214.1
(22) Anmeldetag: 27.06.2000
(51) Int. Cl.: B25J 9/16, G02B 27/12, G01B 11/00

(54) **ERZEUGUNG VON LICHTLINIEN ZUR POSITIONIERHILFE FÜR ROBOTER**
PRODUCTION OF LINES OF LIGHT AS AN AID TO POSITIONING A ROBOT
GENERATION DE LIGNES LUMINEUSES POUR L'AIDE AU POSITIONNEMENT D'UN ROBOT

(30) Priorität: 13.07.1999 DE 19932590
(43) Veröffentlichungstag der Anmeldung: 08.05.2002
(73) Patentinhaber: Hentze-Lissotschenko Patentverwaltungs GmbH & Co. KG, 36419 Gerstengrund (DE)
(72) Erfinder: LISSOTSCHENKO, Vitalij, D-44149 Dortmund (DE); MIKHAILOV, Alexei, D-44227 Dortmund (DE)
(74) Vertreter: Basfeld, Rainer
(86) Internationale Anmeldenummer: PCT/EP2000/005934
(87) Internationale Veröffentlichungsnummer: WO 2001/003892

(56) Entgegenhaltungen:
- DE-C- 428 603
- US-A- 1 921 918
- US-A- 4 453 085
- US-A- 4 523 809
- US-A- 5 095 386
- US-A- 5 854 880

## Beschreibung

Die vorliegende Erfindung betrifft eine Vorrichtung zur Erzeugung von Linien oder Liniengruppen elektromagnetischer Strahlung des optischen Spektralbereichs in einem vorgebbaren Raumbereich gemäß dem Oberbegriff des Anspruchs 1. Sie betrifft auch einen entsprechenden Roboter.

Eine Vorrichtung der vorgenannten Art dient beispielsweise dazu, einem Roboter für die Bearbeitung eines Werkstückes eine Positionierhilfe zu geben oder aber dem Roboter eine Erkennungshilfe für die Kontur oder Geometrie eines Werkstückes zur Verfügung zu stellen. In der Regel handelt es sich bei der elektromagnetischen Strahlung um Laserlicht, das durch die Umwandlungseinheit derart in den vorgegebenen beispielsweise auf dem Werkstück befindlichen Raumbereich hindurchtritt, daß sich auf dem Werkstück für den Roboter erkennbare Liniengruppen beispielsweise in Form eines planaren orthogonalen Gitters abzeichnen. Anhand-,dieser beispielsweise als Gitter ausgeführten Liniengruppen wird der Roboter in die Lage versetzt, an vorgegebenen Punkten Bearbeitungen an dem Werkstück vorzunehmen.

Als Umwandlungseinheiten werden gemäß dem Stand der Technik diffraktive Elemente wie beispielsweise Hologramme verwendet, die Teile des die Umwandlungseinheit durchdringenden Laserlichtes derart beugen können, daß in dem vorgegebenen Raumbereich beispielsweise auf dem Werkstück Linien oder beispielsweise gitterförmige Liniengruppen entstehen. Als nachteilig bei der Ausgestaltung der Umwandlungseinheit mit Hilfe diffraktiver Elemente erweist sich, daß ein nicht geringer Anteil der elektromagnetischen Strahlung in unerwünschte Ordnungen gebeugt wird, so daß in der Regel weitaus weniger als 50% der auf die Umwandlungseinheit auftreffenden elektromagnetischen Strahlung zur Erzeugung der Linien oder Liniengruppen beiträgt. Weiterhin nachteilig bei Ausstattung der Umwandlungseinheit mit diffraktiven Elementen ist die Tatsache, daß nur sehr kleine Aufweitungswinkel erzielbar sind, so daß nur in einem relativ kleinen Raumwinkelbereich hinter der Umwandlungseinheit Linien oder Liniengruppen erzeugt werden können.

Eine Vorrichtung der eingangs genannten Art ist aus dem Patent US 5,095,386 bekannt. Die darin beschriebene Vorrichtung umfasst eine Strahlteilereinheit, die einen Laserstrahl in zwei Teilstrahlen aufteilen kann. Die beiden Teilstrahlen treten derart durch Zylinderlinsen hindurch, dass dadurch in einer Arbeitsebene zwei Linien erzeugt werden. Pro erzeugte Linie werden bei dieser Vorrichtung aus dem Stand der Technik ein Teilstrahl und in diesem Teilstrahl angeordnete Zylinderlinsen benötigt.

Das der vorliegenden Erfindung zugrundeliegende Problem ist die Schaffung einer Vorrichtung der eingangs genannten Art, die effektiver gestaltet ist.

Dies wird erfindungsgemäß durch eine Vorrichtung der eingangs genannten Art mit den kennzeichnenden Merkmalen des Anspruchs 1 erreicht. Die Unteransprüche betreffen bevorzugte Weiterbildungen de Erfindung.

Bei der Verwendung eines refraktiven Elementes lassen sich wesentlich höhere beinahe bei 100% liegende Wirkungsgrade erzielen. Weiterhin bieten refraktive Elemente die Möglichkeit, die auf die Umwandlungseinheit auftreffende elektromagnetische Strahlung wesentlich stärker aufzuweiten, so dass in einem wesentlich größeren Raumwinkelbereich hinter der Umwandlungseinheit die gewünschten Linien oder Liniengruppen gebildet werden können.

Hierzu kann die optisch funktionale Grenzfläche des mindestens einen refraktiven Elements eine für die zu erzeugenden Linien oder Liniengruppen geeignete frei wählbare Gestaltung aufweisen. Erfindungsgemäß ist die optisch funktionale Grenzfläche des mindestens einen refraktiven Elementes in Segmente unterteilt. Hierbei können die Segmente jeweils die gleiche Größe aufweisen und identisch geformt sein.

Gemäß einer bevorzugten Ausführungsform der vorliegenden Erfindung können die einzelnen Segmente eine Zylinderlinsengeometrie aufweisen, wobei vorzugsweise zwei Gruppen von Segmenten mit zueinander senkrecht stehenden Zylinderachsen der Zylindergeometrie vorgesehen sind. Als Zylinderlinsengeometrie der einzelnen Segmente können eine sphärische oder auch eine asphärische Zylinderlinsengeometrie gewählt werden. Insbesondere bei der Wahl derartiger Zylinderlinsengeometrien besteht die Möglichkeit, die durch die Umwandlungseinheit hindurchtretende elektromagnetische Strahlung hinter der Umwandlungseinheit in einen Raumwinkel von bis zu oder sogar mehr als 180° aufzuweiten. Durch die Anordnung einzelner Segmente der optisch funktionalen Grenzfläche als Zylinderlinsensegmente mit zueinander senkrechten Zylinderachsen können beispielsweise kreuzförmige Liniengruppen erzeugt werden, die bei entsprechend arrayartiger Anordnung der refraktiven Elemente eine gitterähnliche Struktur wie beispielsweise ein planares orthogonales Gitter bilden können.

Es besteht erfindungsgemäß die Möglichkeit, daß die erzeugten Linien gerade oder auch gekrümmte Linien sein können. Weiterhin besteht die Möglichkeit, daß die erzeugten Liniengruppen Kreuze, Dreiecke, Vielecke oder Gitter sein können, wobei die die einzelnen Liniengruppen bildenden Linien unter einem rechten oder unter einem von einem rechten abweichenden Winkel aufeinander stehen können.

Gemäß einer bevorzugten Ausführungsform der vorliegenden Erfindung sind die erzeugten Linien oder Liniengruppen derart gekrümmt, daß sie bei dem Auftreffen auf eine gekrümmte Fläche eines Werkstückes in dem vorgegebenen Raumbereich auf diesem Werkstück eine planare Struktur abbilden, insbesondere ein planares orthogonales Gitter. Es ist beispielsweise denkbar, daß ein Bearbeitungsroboter unter Zuhilfenahme der vorgenannten in sich gekrümmten Gitterstruktur das Werkstück derartig bearbeitet bzw. von dem Werkstück beispielsweise Material abträgt, bis die Sensoren des Roboters detektieren, daß die auf die bearbeitete gekrümmte Fläche des Werkstückes auftreffende Linienstruktur ein planares orthogonales Gitter bildet. Durch die von der erfindungsgemäßen Vorrichtung umfaßte Umwandlungseinheit wird somit eine Verzerrung der hindurchtretenden elektromagnetischen Strahlung bewirkt, die durch ein entsprechend gekrümmtes Werkstück derart entzerrt wird, daß eine klare erfaßbare Struktur wie ein planares orthogonales Gitter entsteht.

Es besteht die Möglichkeit, daß die Vorrichtung eine Quelle zur Erzeugung der elektromagnetischen Strahlung, insbesondere eine Laserlichtquelle umfaßt. Die Vorrichtung zusammen mit der Laserlichtquelle kann entweder als separate Einheit verwendet werden oder aber beispielsweise in einen entsprechenden Roboter zur Bearbeitung von Werkstücken eingebaut sein.

Es besteht auch die Möglichkeit, eine derartige Vorrichtung zur Prozeßüberwachung beispielsweise zur Schweißprozeßübewachung einzusetzen, wobei hier insbesondere eine Anwendung in Verbindung mit CMOS-Kameras geeignet erscheint, weil derartige CMOS-Kameras eine wesentlich höhere Dynamik aufweisen, so daß unter anderem auch sowohl der Schweißpunkt als auch dessen Umgebung besser detektierbar sind, so daß beispielsweise auf das zu schweißende Werkstück abgebildete Linien oder Liniengruppen von der Schweißeinheit oder der Prozeßüberwachungseinheit besser detektiert werden können. Weitere Anwendungsmöglichkeiten einer erfindungsgemäßen Vorrichtung liegen im Bereich der Oberflächenanalyse oder auch in dem Bereich der räumlichen Zuordnung, insbesondere der Nachführung eines Systems.

Weitere Vorteile und Merkmale der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine perspektivische Ansicht einer erfindungsgemäßen Umwandlungseinheit;
- Fig. 2: eine Draufsicht auf vier Liniengruppen elektromagnetischer Strahlung, die unter Verwendung der Umwandlungseinheit gemäß Fig. 1 in einem vorgebbaren Raumbereich erzeugt werden können.

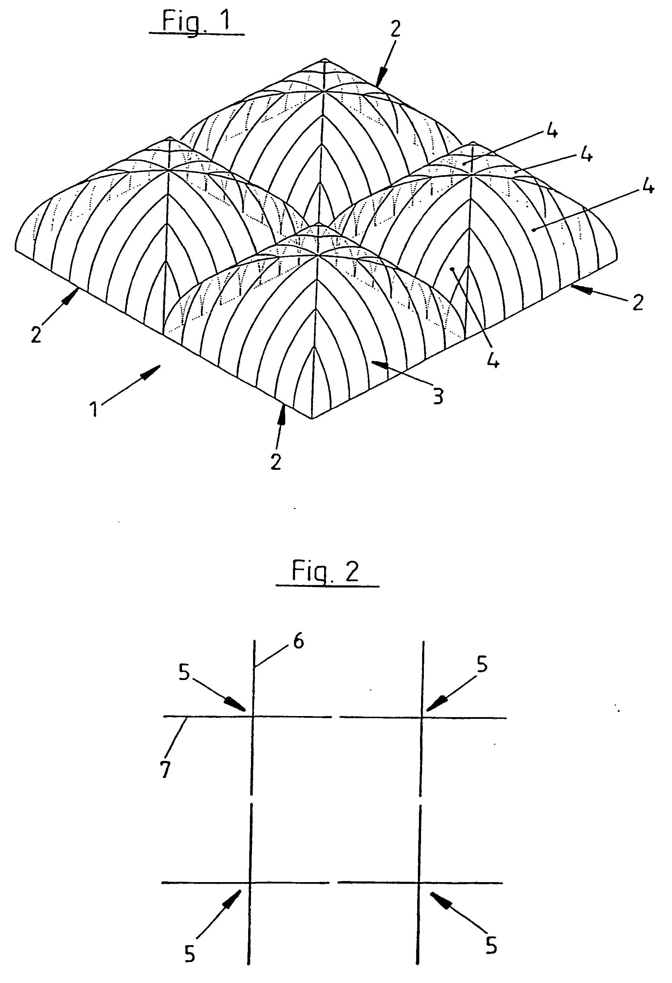

Zunächst wird auf Fig. 1 Bezug genommen.
Die in Fig. 1 abgebildete beispielhafte Ausführungsform einer erfindungsgemäßen Umwandlungseinheit 1 ist aus vier identischen refraktiven Elementen 2 zusammengesetzt. In dem abgebildeten Ausführungsbeispiel sind die refraktiven Elemente 2 jeweils gleich groß und weisen jeweils eine plane quadratische Eintrittsfläche für die elektromagnetische Strahlung auf, wobei die vier Eintrittsflächen derart aneinandergrenzend angeordnet sind, daß die vier quadratischen planen Eintrittsflächen der refraktiven Elemente 2 ein lückenloses Quadrat bilden.

Der planen Eintrittsfläche eines jeden der refraktiven Elemente 2 liegt jeweils eine optisch funktionale Grenzfläche 3 gegenüber, die als Austrittsfläche für die beispielsweise als Laserstrahl ausgeführte elektromagnetische Strahlung dient. In dem abgebildeten Ausführungsbeispiel sind die optisch funktionalen Grenzflächen 3 jeweils in vier Segmente 4 unterteilt, wobei in dem abgebildeten Ausführungsbeispiel die Segmente so gewählt sind, daß das refraktive Element 2 eine reguläre vierseitige Pyramide mit gekrümmten Seitenflächen darstellt. Die Krümmung der Segmente 4 der optisch funtkionalen Grenzfläche 3 ist in dem abgebildeten Ausführungsbeispiel so gewählt, daß jeweils die einander gegenüberliegenden Segmente 4 Abschnitte ein und des selben Zylindermantels sind. Dabei stehen gleichzeitig die Zylinderachsen benachbarter Segmente 4 senkrecht aufeinander. Ein jedes der refraktiven Elemente 2 umfaßt somit in dem abgebildeten Ausführungsbeispiel eine optisch funktionale Grenzfläche 3, die aus vier als Zylinderlinsen dienenden Segmenten 4 zusammengesetzt ist. Diese als Zylinderlinsen dienenden Segmente 4 berühren einander in der Spitze der vorgenannten regulären vielseitigen Pyramide mit gekrümmten Seitenflächen.

Bei entsprechender Transparenz der in Fig. 1 abgebildeten Umwandlungseinheit 1 für die auf die Umwandlungseinheit 1 auftreffende elektromagnetische Strahlung ergibt sich in einem Raumbereich, der sich vorzugsweise in Abstand der Brennweite der zylinderlinsenähnlichen Segmente 4 von der Umwandlungseinheit 1 entfernt befindet, eine Anordnung von Liniengruppen 5, die aus Fig. 2 ersichtlich ist. Jede der Liniengruppen 5 umfaßt zwei einander unter einem Winkel von 90° kreuzende Linien 6, 7. Eine jede der Linien 6 und 7 stellt eine zusammengesetzte Fokusslinie zweier einander gegenüberliegender Segmente 4 einer optisch funktionalen Grenzfläche 3 eines der refraktiven Elemente 2 dar. Durch die senkrechte Stellung der Zylinderachsen benachbarter Segmente 4 eines refraktiven Elementes 2 ergibt sich die kreuzförmige Gestalt einer jeder der Liniengruppen 5. Insbesondere folgt aus dem senkrecht Aufeinanderstehen der Zylinderachsen benachbarter Segmente 4 der rechte Winkel zwischen den Linien 6 und 7.

Falls die Zylinderachsen benachbarter Segmente nicht senkrecht aufeinander stehen, ergibt sich eine Liniengruppe, bei der sich die einzelnen Linien unter einem Winkel ungleich einem rechten Winkel kreuzen. Es besteht erfindungsgemäß die Möglichkeit, andere Geometrien der einzelnen Segmente zu wählen. Beispielsweise können aspherische Zylindergeometrien verwendet werden oder aber auch weitgehend freigestaltete Oberflächengeometrien. Es besteht auch die Möglichkeit die optisch funktionalen Grenzflächen in mehr oder weniger als vier Segmente zu unterteilen.

Auf diese Weise lassen sich nicht nur kreuzförmige Liniengruppen erzeugen, die gemäß Fig. 2 insgesamt ein Gitter ergeben, sondern auch ein Dreieck ergebende Linien oder ein Vieleck ergebende Linien, die dann mit entsprechenden anderen Liniengruppen zu anderen Mustern zusammengefügt werden. Es besteht auch die Möglichkeit die einzelnen Linien als gekrümmte Linien auszuführen, je nach geometrischer Gestaltung der einzelnen Segmente beziehungsweise der einzelnen optisch funktionalen Grenzflächen der Umwandlungseinheit.

Weiterhin besteht die Möglichkeit beispielsweise gitterförmige Liniengruppen zu erzeugen, die nur dann als orthogonale Gitterstruktur ersichtlich werden, wenn die durch die Umwandlungseinheit hindurchtretende Laserstrahlung in dem vorgegebenen Raumbereich auf eine gekrümmte Fläche beispielsweise eines Werkstückes auftritt. Eine derartige als orthogonale Gitterstruktur bei Projektion auf eine gekrümmte Fläche erscheinende Struktur könnte beispielsweise im Rahmen von Bearbeitungsvorgängen an dem vorgenannten Werkstück verwendet werden. Insbesondere könnte ein das Werkstück formender Roboter an dem Werkstück gezielt Material abtragen, bis das von der Umwandlungseinheit auf das Werkstück hindurchtretende Licht ein orthogonales planares Gitter ergibt. Genau in diesem Fall hat das Werkstück die gewünschte gekrümmte Fläche, auf der die projezierten Liniengruppen ein orthogonales planares Gitter ergeben.

Es besteht weiterhin die Möglichkeit, daß in einen Werkstücke bearbeitenden Roboter die Vorrichtung zur Erzeugung von Linien oder Liniengruppen integriert ist, so daß sowohl eine Laserlichtquelle als auch eine entsprechende Umwandlungseinheit von dem Roboter umfaßt ist. Alternativ dazu kann eine separate Vorrichtung zur Erzeugung von Linien oder Liniengruppen vorgesehen sein, die eine Laserlichtquelle und eine Umwandlungseinheit umfaßt und dementsprechend in einem vorgegebenen Abstand zu dem von einem Roboter zu bearbeitenden Werkstück angeordnet werden muß.

## Patentansprüche

1. Vorrichtung zur Erzeugung von Linien (6, 7) oder Liniengruppen (5) elektromagnetischer Strahlung des optischen Spektralbereichs in einem vorgebbaren Raumbereich, wobei die Linien (6, 7) oder Liniengruppen (5) als Positionierhilfen oder Geometriedetektionshilfen dienen können, umfassend mindestens eine Umwandlungseinheit (1), die für die verwendete elektromagnetische Strahlung zumindest teilweise transparent ist und durch sie hindurchtretende elektromagnetische Strahlung, insbesondere kohärente Strahlung beziehungsweise Laserstrahlung, derart umwandeln kann, dass die elektromagnetische Strahlung Linien (6, 7) oder Liniengruppen (5) in dem vorgegebenen Raumbereich bildet, wobei die Umwandlungseinheit (1) mindestens ein refraktives Element (2) umfasst, wobei durch Brechung der durch die Umwandlungseinheit (1) hindurchtretenden Strahlung an mindestens einer optisch funktionalen Grenzfläche (3) des refraktiven Elementes (2) die Linien (6, 7) oder Liniengruppen (5) in dem vorgegebenen Raumbereich gebildet wird, **dadurch gekennzeichnet, dass** die optisch funktionale Grenzfläche (3) des mindestens einen refraktiven Elementes (2) in Segmente (4) unterteilt ist.

2. Vorrichtung nach Anspruch 1, **dadurch gekennzeichnet, dass** die Segmente (4) die gleiche Größe aufweisen und vorzugsweise identisch geformt sind.

3. Vorrichtung nach einem der Ansprüche 1 oder 2, **dadurch gekennzeichnet, dass** die einzelnen Segmente (4) eine Zylinderlinsengeometrie aufweisen, wobei vorzugsweise zwei Gruppen von Segmenten (4) mit zueinander senkrecht stehenden Zylinderachsen der Zylindergeometrie vorgesehen sind.

4. Vorrichtung nach Anspruch 3, **dadurch gekennzeichnet, dass** die Zylinderlinsengeometrie der einzelnen Segmente (4) eine sphärische oder eine asphärische Zylinderlinsengeometrie ist.

5. Vorrichtung nach einem der Ansprüche 1 bis 4, **dadurch gekennzeichnet, dass** die erzeugten Linien (6, 7) gerade oder gekrümmte Linien sein können.

6. Vorrichtung nach einem der Ansprüche 1 bis 5, **dadurch gekennzeichnet, dass** die erzeugten Liniengruppen (5) Kreuze, Dreiecke, Vielecke, Gitter oder dergleichen sein können, wobei die die einzelnen Liniengruppen (5) bildenden Linien (6, 7) unter einem rechten Winkel oder unter einem von einem rechten Winkel abweichenden Winkel aufeinanderstehen können.

7. Vorrichtung nach einem der Ansprüche 1 bis 6, **dadurch gekennzeichnet, dass** die erzeugten Linien (6, 7) oder die erzeugten Liniengruppen (5) derart gekrümmt sind, dass sie bei dem Auftreffen auf eine gekrümmte Fläche eines Werkstückes in dem vorgegebenen Raumbereich auf diesem eine planare Struktur abbilden, insbesondere ein planares orthogonales Gitter.

8. Vorrichtung nach einem der Ansprüche 1 bis 7, **dadurch gekennzeichnet, dass** die Vorrichtung eine Quelle zur Erzeugung der elektromagnetischen Strahlung, insbesondere eine Laserlichtquelle umfasst.

9. Roboter zur Bearbeitung von Werkstücken umfassend eine Vorrichtung nach einem der Ansprüche 1 bis 8.

## Claims

1. Device for generating lines (6, 7) or line groups (5) of electromagnetic radiation of the optical spectral region in a prescribable region of space, it being possible to use the lines (6, 7) or line groups (5) as positioning aids or geometry detection aids, comprising at least one conversion unit (1) which is at least partially transparent to the electromagnetic radiation used and can convert electromagnetic radiation passing through it, particularly coherent radiation or laser radiation, in such a way that the electromagnetic radiation forms lines (6, 7) or line groups (5) in the prescribed region of space, the conversion unit (1) comprising at least one refractive element (2), the lines (6, 7) or line groups (5) being formed in the prescribed region of space by refraction of the radiation passing through the conversion unit (1) at least one optically functional boundary surface (3) of the refractive element (2), **characterized in that** the optically functional boundary surface (3) of the at least one refractive element (2) is subdivided into segments (4).

2. Device according to Claim 1, **characterized in that** the segments (4) are of the same size and are preferably identically shaped.

3. Device according to either of Claims 1 and 2, **characterized in that** the individual segments (4) have a cylindrical lens geometry, two groups of segments (4) with cylinder axes of the cylinder geometry that are perpendicular to one another preferably being provided.

4. Device according to Claim 3, **characterized in that** the cylindrical lens geometry of the individual segments (4) is a spherical or an aspherical cylindrical lens geometry.

5. Device according to one of Claims 1 to 4, **characterized in that** the generated lines (6, 7) can be straight or curved lines.

6. Device according to one of Claims 1 to 5, **characterized in that** the generated line groups (5) can be crosses, triangles, polygons, grids or the like, it being possible for the lines (6, 7) forming the individual line groups (5) to be at a right angle to one another or at an angle to one another deviating from a right angle.

7. Device according to one of Claims 1 to 6, **characterized in that** the generated lines (6, 7) or the generated line groups (5) are curved in such a way that upon striking a curved surface of a workpiece in the prescribed region of space they form on said workpiece a planar structure, in particular a planar orthogonal grid.

8. Device according to one of Claims 1 to 7, **characterized in that** the device comprises a source for generating the electromagnetic radiation, in particular a laser light source.

9. Robot for processing workpieces, comprising a device according to one of Claims 1 to 8.

## Revendications

1. Dispositif pour produire des lignes (6, 7) ou des groupes de lignes (5) de rayonnement électromagnétique de la plage spectrale optique dans une zone spatiale pouvant être prédéfinie, les lignes (6, 7) ou les groupes de lignes (5) pouvant servir d'aide au positionnement ou d'aides à la détection de la forme géométrique, comprenant au moins une unité de conversion (1) qui est au moins partiellement transparente pour le rayonnement électromagnétique employé et peut convertir le rayonnement électromagnétique qui la traverse, notamment le rayonnement cohérent ou le rayonnement laser de telle sorte que le rayonnement électromagnétique forme des lignes (6, 7) ou des groupes de lignes (5) dans la zone spatiale prédéfinie, l'unité de conversion (1) comprenant au moins un élément réfractif (2), les lignes (6, 7) ou les groupes de lignes (5) étant formés dans la zone spatiale prédéfinie par réfraction du rayonnement qui traverse l'unité de conversion (1) sur au moins une surface de délimitation (3) optiquement fonctionnelle de l'élément réfractif (2), **caractérisé en ce que** la surface de délimitation (3) optiquement fonctionnelle de l'au moins un élément réfractif (2) est divisée en segments (4).

2. Dispositif selon la revendication 1, **caractérisé en ce que** les segments (4) présentent la même taille et sont de préférence de formes identiques.

3. Dispositif selon l'une des revendications 1 ou 2, **caractérisé en ce que** les segments individuels (4) présentent une forme géométrique de lentille cylindrique, deux groupes de segments (4), ayant des axes de cylindre de la forme géométrique cylindrique perpendiculaires les uns par rapport aux autres, étant de préférence prévus.

4. Dispositif selon la revendication 3, **caractérisé en ce que** la forme géométrique de lentille cylindrique de chacun des segments (4) est une forme géométrique de lentille cylindrique sphérique ou asphérique.

5. Dispositif selon l'une des revendications 1 à 4, **caractérisé en ce que** les lignes (6, 7) produites peuvent être des lignes droites ou courbes.

6. Dispositif selon l'une des revendications 1 à 5, **caractérisé en ce que** les groupes de lignes (5) produits peuvent être des croix, des triangles, des polygones, des grilles ou similaires, les lignes (6, 7) qui constituent les groupes de lignes (5) individuels pouvant être superposées les unes aux autres suivant un angle droit ou suivant un angle différent d'un angle droit.

7. Dispositif selon l'une des revendications 1 à 6, **caractérisé en ce que** les lignes (6, 7) produites ou les groupes de lignes (5) produits sont courbés de manière à former, lorsqu'ils rencontrent une surface courbée d'une pièce dans la zone spatiale prédéfinie, une structure planaire sur celle-ci, notamment une grille orthogonale planaire.

8. Dispositif selon l'une des revendications 1 à 7, **caractérisé en ce que** le dispositif comprend une source pour générer le rayonnement électromagnétique, notamment une source de lumière laser.

9. Robot pour usiner des pièces comprenant un dispositif selon l'une des revendications 1 à 8.
